# EUROPEAN PATENT SPECIFICATION

(11) **EP 4 546 887 B1**
(45) Date of publication and mention of the grant of the patent: **29.04.2026**
(21) Application number: 23857802.5
(22) Date of filing: 09.08.2023
(51) Int. Cl.: H04W 52/02, H04W 72/56, H04W 72/23, H04W 84/12

(54) **ELECTRONIC DEVICE AND R-TWT OPERATION CONTROL METHOD**
ELEKTRONISCHE VORRICHTUNG UND R-TWT-BETRIEBSSTEUERUNGSVERFAHREN
DISPOSITIF ÉLECTRONIQUE ET PROCÉDÉ DE COMMANDE D'OPÉRATION DE TEMPS R-TWT

(30) Priority: 23.08.2022 KR 20220105540; 06.10.2022 KR 20220128024
(43) Date of publication of application: 30.04.2025
(73) Proprietor: Samsung Electronics Co., Ltd., Suwon-si, Gyeonggi-do 16677 (KR)
(72) Inventor: CHOI, Junsu, Suwon-si Gyeonggi-do 16677 (KR)
(74) Representative: HGF
(86) International application number: PCT/KR2023/095035
(87) International publication number: WO 2024/043770

(56) References cited:
- WO-A1-2022/051311
- WO-A1-2022/094297
- WO-A1-2022/132030
- US-A1- 2022 078 844
- US-A1- 2022 078 844
- US-A1- 2022 132 428

## Description

### TECHNICAL FIELD

Embodiments of the present disclosure relate to an electronic device and a restricted target wake time (R-TWT) operation control method.

### BACKGROUND ART

With the advent of electronic devices such as smartphones, tablet PCs, and laptops, the demand for high-speed wireless connectivity has exploded. These trends and the growing demand for high-speed wireless connectivity have firmly established the IEEE 802.11 wireless communication standard as a representative and universal high-speed wireless communication standard in the information technology (IT) industry. Early wireless local area network (LAN) technologies developed around 1997 could support transmission speeds of up to 1 to 2 megabits per second (Mbps). Since then, based on the demand for faster wireless connectivity, wireless LAN technologies have steadily developed, including new wireless LAN technologies that improve transmission speeds, such as IEEE 802.11n, 802.11ac, and 802.11ax. The current latest standard, IEEE 802.11 ax, has a maximum transmission speed of several gigabits per second (Gbps).

Today, wireless LANs provide high-speed wireless connections to users in various public places such as offices, airports, stadiums, and stations, in addition to private places such as homes. Accordingly, wireless LAN has greatly influenced people's lifestyles and culture and has become a lifestyle in modern life.

US 2022/078844 A1 discloses scheduling wireless stations within a target wake up time period. In some implementations, an access point (AP) establishes a restricted target wake time (TWT) session including at least one restricted TWT service period (SP) for peer-to-peer (P2P) communications. The AP admits a group of wireless stations (STAs) associated with P2P communications as members of the restricted TWT session, obtains a transmission opportunity (TXOP) on the wireless channel during the at least one restricted TWT SP, and transmits, on the wireless channel, a protection frame identifying one or more STAs of the group of STAs belonging to the restricted TWT session that are permitted to transmit or receive P2P communications on the wireless channel during the TXOP. The protection frame may also indicate to receiving devices other than the one or more identified STAs that the wireless channel is unavailable for at least a portion of the TXOP.

### DISCLOSURE OF THE INVENTION

### TECHNICAL SOLUTIONS

The scope of protection is defined by the appended claims.

An electronic device according to this disclosure may include at least one wireless communication module configured to transmit and receive a wireless signal, at least one processor operatively connected to the wireless communication module, and a memory electrically connected to the processor, and including instructions executable by the processor, wherein when the instructions are executed by the processor, the processor may be configured to perform a plurality of operations, the plurality of operations including receiving a beacon signal including a target wake time (TWT) element for a restricted target wake time (R-TWT) service, obtaining member information from beacon signal, and performing communication in an R-TWT service period (SP) based on the member information, wherein the member information may include information associated with a device granted membership to perform communication by prioritizing transmission of frames in the R-TWT SP.

An operating method of an electronic device according to an embodiment may include receiving a beacon signal including a TWT element for an R-TWT service, obtaining member information from the beacon signal, and performing communication in an R-TWT SP based on the member information, wherein the member information may include information associated with a device granted membership to perform communication by prioritizing transmission of frames in the R-TWT SP.

An electronic device according to an embodiment may include at least one wireless communication module configured to transmit and receive a wireless signal, at least one processor operatively connected to the wireless communication module, and a memory electrically connected to the processor, and including instructions executable by the processor, wherein when the instructions are executed by the processor, the processor may be configured to perform a plurality of operations, the plurality of operations including receiving a beacon signal including a TWT element for an R-TWT service; and switching from one of a doze mode and a wake mode to another in an R-TWT SP based on member information obtained from the beacon signal, wherein the member information may include information associated with a device granted membership to perform communication by prioritizing transmission of frames in the R-TWT SP.

### BRIEF DESCRIPTION OF DRAWINGS

FIG. 1 illustrates an example of a wireless local area network (WLAN) system according to an embodiment.
FIG. 2 illustrates an example of a WLAN system according to an embodiment.
FIG. 3 is a diagram illustrating a protocol for traffic transmission according to an embodiment.
FIG. 4 is a diagram illustrating a restricted target wake time (R-TWT) protocol according to an embodiment.
FIG. 5 is a diagram illustrating a TWT element of an R-TWT protocol according to an embodiment.
FIG. 6 is a diagram illustrating an operation in which a station (STA) performs communication based on member information according to an embodiment.
FIG. 7 is a diagram illustrating an operation in which an STA is granted membership according to an embodiment.
FIG. 8 is a diagram illustrating an operation in which an STA is assigned a subservice period (SP) based on member information according to an embodiment.
FIG. 9 is a diagram illustrating an operation in which an STA is reassigned a sub-SP based on member information according to an embodiment.
FIG. 10 is a flowchart illustrating an operation in which an STA is reassigned a sub-SP based on member information according to an embodiment.
FIG. 11 is a diagram illustrating a beacon signal including a vendor-specific information element (VS IE) according to an embodiment.
FIG. 12 is a flowchart illustrating an operating method of an STA according to an embodiment.
FIG. 13 is a block diagram illustrating an electronic device in a network environment according to an embodiment.

### BEST MODE FOR CARRYING OUT THE INVENTION

Hereinafter, embodiments will be described in detail with reference to the accompanying drawings. When describing the embodiments with reference to the accompanying drawings, like reference numerals refer to like components, and any repeated description related thereto will be omitted.

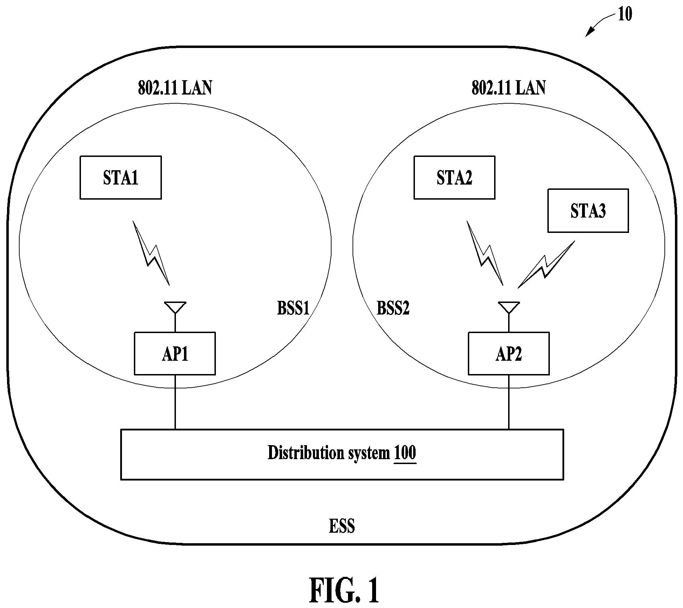

FIG. 1 illustrates an example of a wireless local area network (WLAN) system according to an embodiment.

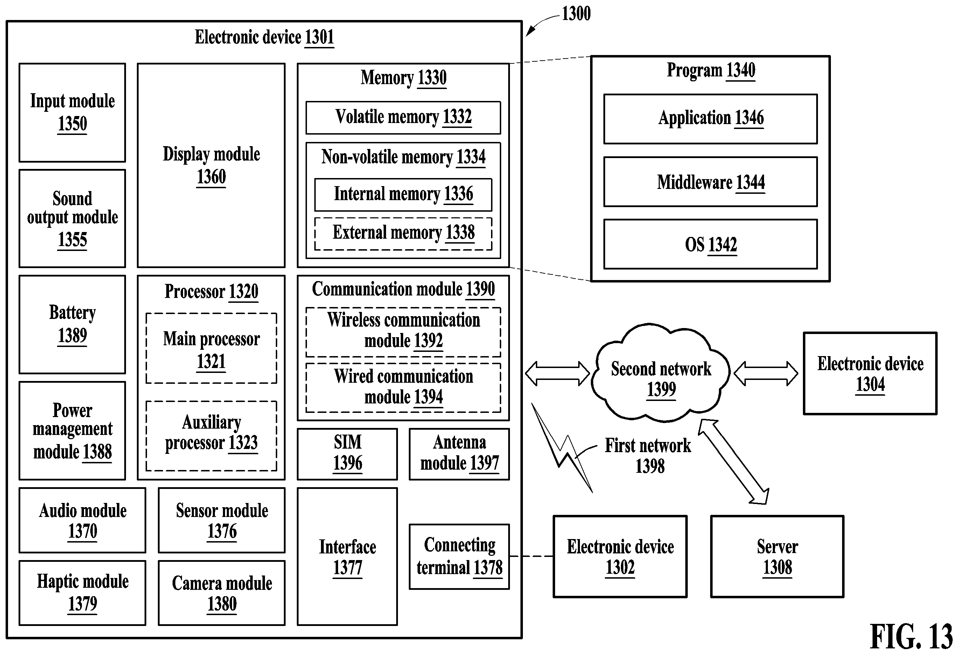

Referring to FIG. 1, according to an embodiment, a WLAN system 10 may refer to an infrastructure mode in which an access point (AP) is present in the structure of a wireless local area network (WLAN) of the Institute of Electrical and Electronic Engineers (IEEE) 802.11 standard. The WLAN system 10 may include one or more basic service sets (BSSs) (e.g., BSS1 and BSS2). The BSS (e.g., BSS1 or BSS2) may refer to a set of access points (APs) and stations (STAs) (e.g., an electronic device 1301, an electronic device 1302, and an electronic device 1304 of FIG. 13) that may communicate with each other with a successful synchronization. The BSS1 may include an AP1 and an STA1, and the BSS2 may include an AP2, an STA2, and an STA3.

According to an embodiment, the WLAN system 10 may include at least one STA (e.g., STA1 to STA3), a plurality of APs (e.g., AP1 and AP2) providing a distribution service, and a distribution system 100 connecting the plurality of APs (e.g., AP1 and AP2). The distribution system 100 may implement an extended service set (ESS), which is a service set extended by connecting a plurality of BSSs (e.g., BSS1 and BSS2). The ESS may be used as a term referring to one network in which the plurality of APs (e.g., AP1 and AP2) are connected through the distribution system 100. The plurality of APs (e.g., AP1 and AP2) included in one ESS may have the same service set identification (SSID).

According to an embodiment, the STA (e.g., STA1 to STA3) may be an arbitrary functional medium including a medium access control (MAC) and a physical layer interface for a wireless medium that conform to the provisions of the IEEE 802.11 standard. The term "STA" (e.g., STA1 to STA3) may be used as including both an AP-STA and a non-AP STA. The STA (e.g., STA1 to STA3) may be referred to by various names, such as an electronic device, a mobile terminal, a wireless device, a wireless transmit/receive unit (WTRU), a user equipment (UE), a mobile station (MS), a mobile subscriber unit, or simply, a user.

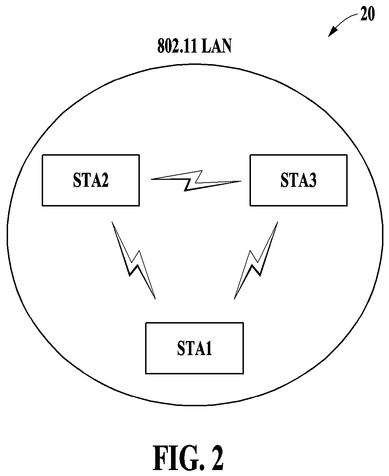

FIG. 2 illustrates an example of a WLAN system according to an embodiment.

Referring to FIG. 2, according to an embodiment, a WLAN system 20 may represent an ad-hoc mode in which a network is established and communicated between a plurality of STAs (e.g., STA1 to STA3) without any AP in the structure of a WLAN of the IEEE 802.11 standard, as opposed to the WLAN system 10 of FIG. 1. The WLAN system 20 may include a BSS operating in an ad-hoc mode, for example, an independent basic service set (IBSS).

According to an embodiment, the IBSS does not include any AP, and therefore, it may not include a centralized management entity that performs a central management function. In the IBSS, the STAs may be managed in a distributed manner. In the IBSS, all the STAs may be mobile STAs and may form a self-contained network (or an integrated network) because access to a distribution system is not allowed.

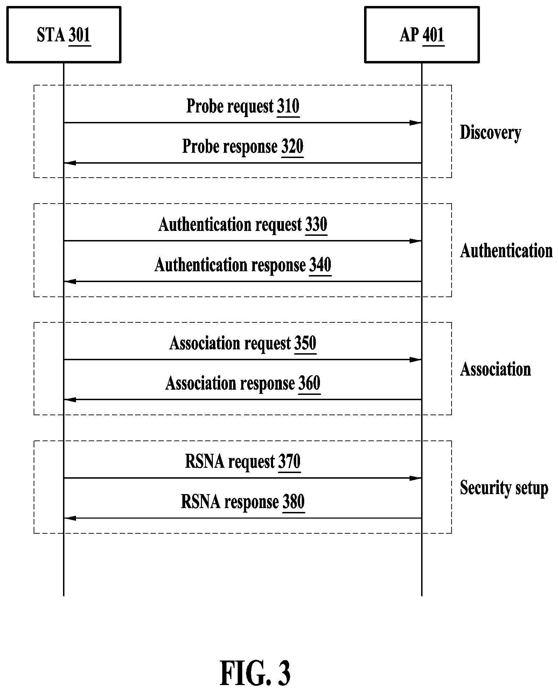

FIG. 3 is a diagram illustrating an example of a link setup operation according to an embodiment.

Referring to FIG. 3, according to an embodiment, the link setup operation may be performed between devices (e.g., STA 301 and AP 401) to communicate with each other. For the link setup, operations for network discovery, execution of authentication, establishing association, and setting the security may be performed. The link setup operation may be referred to as a session initiation operation or a session setup operation. Further, the operations of discovery, authentication, association, and setting security of the link setup operation may be collectively referred to as an association operation.

According to an embodiment, the network discovery operation may include operation 310 and operation 320. In operation 310, the STA 301 (e.g., the electronic device 1301, the electronic device 1302, or the electronic device 1304 of FIG. 13) may transmit a probe request frame to probe which AP exists and may wait for a response to the probe request frame. The STA 301 may find a network to participate in by performing a scanning operation to access the network. The probe request frame may include information of the STA 301 (e.g., device name and/or address of the STA 301). The scanning operation in operation 310 may refer to an active scanning operation. In operation 320, the AP 401 may transmit a probe response frame to the STA 301 that has transmitted the probe request frame, in response to the probe request frame. The probe response frame may include information of the AP 401 (e.g., device name and/or network information of the AP 401). While FIG. 3 shows that the network discovery operation is performed through active scanning, the disclosure is not necessarily limited thereto. In case that the STA 301 performs passive scanning, the operation of transmitting the probe request frame may be omitted. The STA 301 that performs passive scanning may receive a beacon frame transmitted by the AP 401 and perform the following subsequent procedures.

According to an embodiment, after the STA 301 discovers the network, an authentication operation including operation 330 and operation 340 may be performed. In operation 330, the STA 301 may transmit an authentication request frame to the AP 401. In operation 340, the AP 401 may determine whether to allow authentication for the corresponding STA 301 based on information contained in the authentication request frame. The AP 401 may provide a result of the authentication processing to the STA 301 via an authentication response frame. The authentication frame used for the authentication request/response may correspond to a management frame.

According to an embodiment, the authentication frame may include information about an authentication algorithm number, an authentication transaction sequence number, a status code, a challenge text, a robust security network (RSN), or a finite cyclic group.

According to an embodiment, after successful authentication of the STA 301, an association operation including operation 350 and operation 360 may be performed. In operation 350, the STA 301 may transmit an association request frame to the AP 401. In operation 360, the AP 401 may transmit an association response frame to the STA 301 in response to the association request frame.

According to an embodiment, the association request frame and/or the association response frame may include information related to various capabilities. For example, the association request frame may include information related to various capabilities, a beacon listening interval, a service set identifier (SSID), supported rates, supported channels, an RSN, a mobility domain, supported operating classes, a traffic indication map (TIM) broadcast request, and/or information related to an interworking service capability. For example, the association response frame may include information related to various capabilities, a status code, association ID (AID), supported rates, an enhanced distributed channel access (EDCA) parameter set, a received channel power indicator (RCPI), a received signal-to-noise indicator (RSNI), a mobility domain, a timeout interval (e.g., an association comeback time), an overlapping BSS scan parameter, a TIM broadcast response, and/or information such as a QoS map.

According to an embodiment, after the STA 301 is successfully associated with the network, a security setup operation including operation 370 and operation 380 may be performed. The security setup operation may be performed through a robust security network association (RSNA) request/response. For example, the security setup operation may include an operation of performing private key setup by means of a 4-way handshaking through an extensible authentication protocol over LAN (EAPOL) frame. The security setup operation may be performed according to a security scheme that is not defined in the IEEE 802.11 standard.

According to an embodiment, a security session may be established between the STA 301 and the AP 401 according to the security setup operation, and the STA 301 and the AP 401 may proceed with secure data communication.

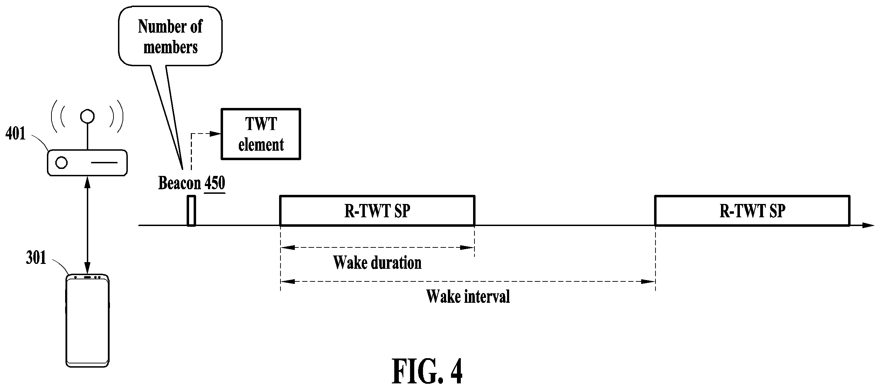

FIG. 4 is a diagram illustrating a restricted target wake time (R-TWT) protocol according to an embodiment.

Referring to FIG. 4, according to an embodiment, in a wireless communication system (e.g., the wireless communication system 10 of FIG. 1 or the wireless communication system 20 of FIG. 2), devices (e.g., the STA 301 and the AP 401) may perform wireless communication according to an R-TWT protocol. The R-TWT protocol may be a protocol to support a latency-demanding service that transmits and receives latency-sensitive traffic. The R-TWT protocol may be a technology that prioritizes securing transmission and reception time for latency-sensitive traffic using a broadcast TWT. The latency-sensitive traffic may be traffic included in a predefined access category (AC). The latency-sensitive traffic may be traffic assigned a predefined traffic identifier (TID). Latency may refer to the latency defined in IEEE 802.11ax. Latency may refer to the interval between when a packet is transmitted from a source and when the packet reaches a destination.

According to an embodiment, the devices (e.g., the STA 301 and the AP 401) may perform wireless communication based on TWT settings (e.g., TWT parameters). The TWT parameters may be operational parameters (e.g., a periodic parameter and/or an aperiodic parameter) for communication between the devices (e.g., the STA 301 and the AP 401) based on the TWT protocol. The TWT parameters may include information about an R-TWT service period (SP). For example, the TWT parameters may include start time information of the R-TWT SP, duration information of the R-TWT SP, and/or R-TWT interval information of the R-TWT SP.

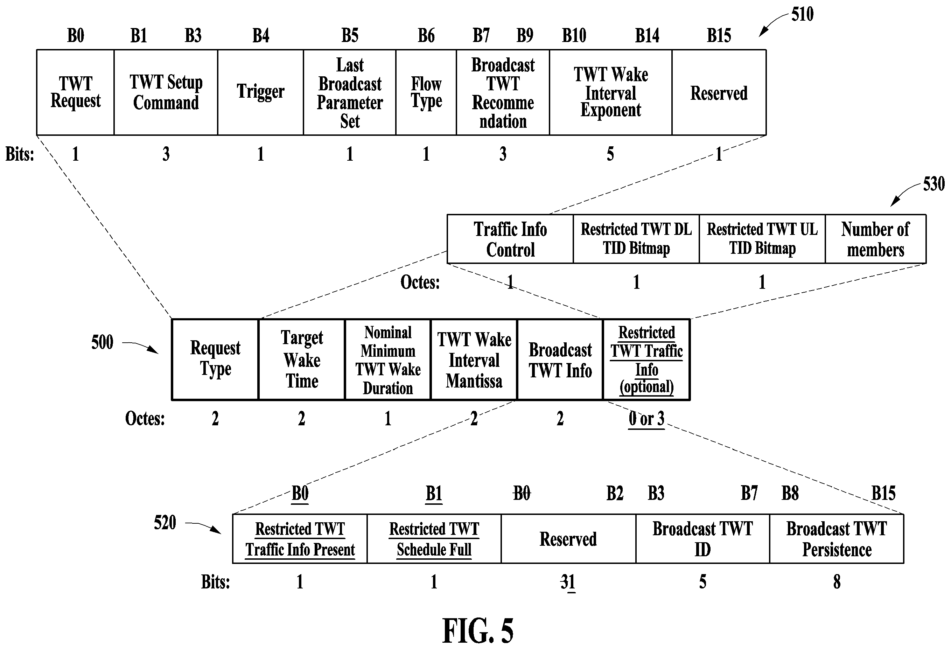

According to an embodiment, the devices (e.g., the STA 301 and the AP 401) may implement the R-TWT protocol through a broadcast TWT (e.g., a TWT element 500 of FIG. 5). In the broadcast TWT, the AP 401 may perform scheduling in advance for the R-TWT SP. In the broadcast TWT, the AP 401 may advertise a beacon signal 450. Member information may be included in a restricted TWT traffic information field of the TWT element (e.g., the TWT element 500 of FIG. 5).

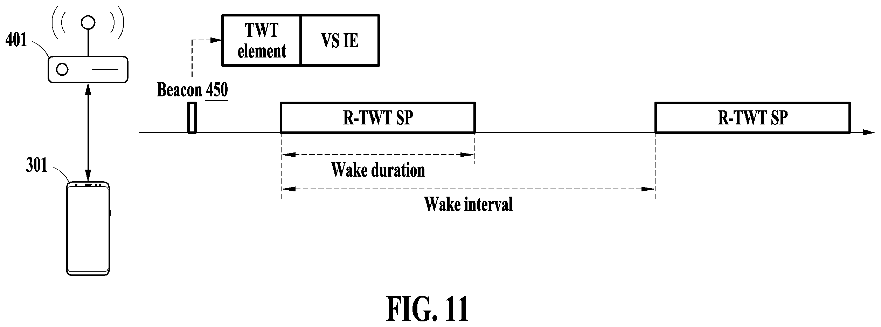

According to an embodiment, the beacon signal 450 may include the TWT element and the member information. The TWT element may determine the TWT parameters. The TWT parameters may include information about the R-TWT SP. The member information may include information associated with a device granted membership to perform communication by prioritizing transmission of frames in the R-TWT SP. For example, the information associated with the device may be about the number of devices granted membership. The member information may be included in one of the TWT element and a vendor-specific information element (VS IE) described later with reference to FIG. 11. The VS IE may be included in the beacon signal 450.

According to an embodiment, in the broadcast TWT, the AP 401 may advertise the beacon signal 450 including information about an R-TWT SP of a link, information about a TID mapped to the link, information about a direction of the link (e.g., uplink or downlink), and the member information. The member information may be included in one of the VS IE and the TWT element included in the beacon signal 450.

According to an embodiment, in the broadcast TWT, the STA 301 may request membership for a scheduled R-TWT SP. The membership may be for the STA 301 to perform communication by prioritizing transmission of frames in the R-TWT SP. For example, the STA 301 may obtain the information about the TID (traffic ID) mapped to the link from the TWT element. The STA 301 may transmit a frame requesting membership from the AP 401 to prioritize and transmit (or receive) traffic (e.g., a frame including data) mapped to a membership link. Since the AP 401 grants membership to the STA 301 based on priority information of traffic corresponding to the TID, it may be easy to manage the quality of communication between the STA 301 and the AP 401. For example, the AP 401 may grant membership to the STA 301 only when the STA 301 transmits (or receives) latency-sensitive traffic (e.g., a game, an audio/video call, etc.) based on the priority information of the traffic corresponding to the TID. The AP 401 may not grant membership to the STA 301 when the STA 301 transmits (or receives) latency-tolerant traffic (e.g., web browsing, video streaming, etc.) based on the priority information of the traffic corresponding to the TID.

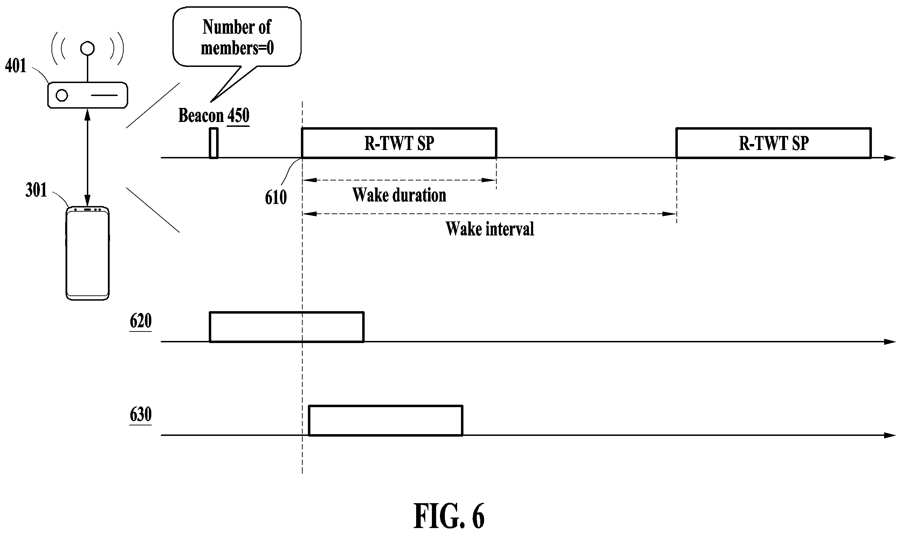

According to an embodiment, the STA 301 may obtain the TWT element and the member information for the R-TWT SP from the beacon signal 450. When the STA 301 is an electronic device not granted membership (e.g., a non-member STA), the STA 301 may perform communication based on the member information, thereby reducing inefficiency that occurs when the number of devices granted membership is "0". The operation of the STA 301 will be described in detail later with reference to FIG. 6.

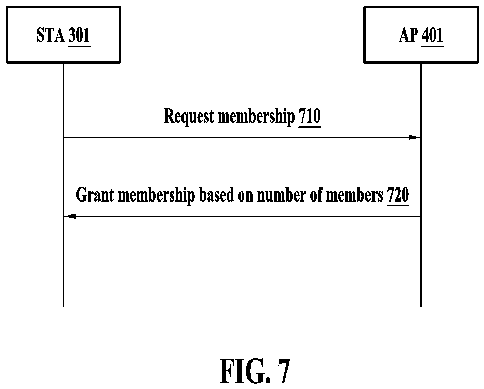

According to an embodiment, the STA 301 may perform operations described below with reference to FIGS. 7 to 10 by performing communication in the R-TWT SP based on the member information (e.g., the number of members), thereby reducing inefficiency that occurs when the number of devices granted membership is greater than or equal to "2". The operation of the STA 301 will be described in detail later with reference to FIGS. 7 to 10.

According to an embodiment, the STA 301 may perform communication in the R-TWT SP based on the member information (e.g., the number of members), thereby efficiently using time resources from the perspective of the entire network both for a device granted membership (e.g., a member STA) and an electronic device not granted membership (e.g., a non-member STA). The STA 301 may reduce current consumption by efficiently utilizing the time resources.

FIG. 5 is a diagram illustrating a TWT element of an R-TWT protocol according to an embodiment.

Referring to FIG. 5, according to an embodiment, a TWT element 500 may be a broadcast TWT parameter set field format according to IEEE 802.11 (e.g., IEEE 802.11be). The TWT element 500 may include a request type field 510, a target wake time field, a nominal minimum TWT wake duration field, a TWT wake interval mantissa field, and a broadcast TWT information field 520. The TWT element 500 may further include a restricted TWT traffic information field 530. In this case, the request type field 510 may include a plurality of sub-fields, for example, a TWT request field, a TWT setup command field, a trigger field, a last broadcast parameter set field, a flow type field, a broadcast TWT recommendation field, a TWT wake interval exponent field, and a reserved field.

According to an embodiment, the TWT element 500 may determine TWT parameters. The TWT parameters may include information about the R-TWT SP. The information about the R-TWT SP may include start time information of the R-TWT SP, wake duration information of the R-TWT SP, and/or interval information of the R-TWT SP. The TWT parameters may be determined by setting the values of one or more of the plurality of fields included in the TWT element 500. The start time of the TWT SP may be set in the target wake time field of the TWT element 500, and the TWT duration for which the TWT SP persists (or is maintained) may be set in the nominal minimum TWT wake duration field of the TWT element 600. A TWT interval (e.g., the value of an interval) of the TWT SP may be determined by the values set in the TWT wake interval mantissa field and the TWT wake interval exponent field of the TWT element 500. Information on a mantissa to determine the TWT interval may be set in the TWT wake interval mantissa field, and information on an exponent value with a base of "2" to determine the TWT interval may be set in the TWT wake interval exponent field. The size of the TWT interval may be determined based on TWT wake interval mantissa x 2(TWT wake interval exponent).

According to an embodiment, the broadcast TWT information field 520 may include a plurality of sub-fields, for example, a restricted TWT traffic info present field, a restricted TWT schedule full field, a reserved field, a broadcast TWT ID field, and a broadcast TWT persistence field. The restricted TWT traffic info present field may be set to "1" when a restricted TWT parameter set is present, to indicate the presence of the restricted TWT traffic info field. The restricted TWT schedule full field may be set to "1" when there is no possibility that an AP for performing R-TWT scheduling allows new membership in a corresponding schedule. The Broadcast TWT ID field may include information about the broadcast TWT ID. The Broadcast TWT ID field may be used to determine the mapping between the TWT ID and the TWT SP. The broadcast TWT persistence field may include information about the period for which broadcast TWT information persists. The broadcast TWT persistence field may include information about the period of a beacon.

According to an embodiment, the restricted TWT traffic information field 530 may include a plurality of sub-fields, for example, a traffic information control field, a restricted TWT downlink traffic identifier bitmap field, and a restricted TWT uplink traffic identifier bitmap field. The restricted TWT traffic information field 530 may be present when the value of the restricted TWT traffic information present field is "1". The traffic information control field may include a downlink traffic ID bitmap valid field, an uplink traffic ID bitmap valid field, and a reserved field. The downlink traffic ID bitmap valid field may indicate whether the restricted TWT downlink traffic ID bitmap field includes valid information. If the value of the downlink traffic ID bitmap valid field is "0", downlink traffic of all traffic IDs may be identified as latency-sensitive traffic, and the restricted TWT downlink traffic ID bitmap field may be reserved. The uplink traffic ID bitmap valid field may indicate whether the restricted TWT uplink traffic ID bitmap field includes valid information. If the value of the uplink traffic ID bitmap valid field is "0", uplink traffic of all traffic IDs may be identified as latency-sensitive traffic, and the restricted TWT uplink traffic ID bitmap field may be reserved. The restricted TWT downlink traffic ID bitmap field and the restricted TWT uplink traffic ID bitmap field may specify which traffic IDs (TIDs) are identified as a downlink direction and an uplink direction in a latency-sensitive traffic stream by the TWT scheduling AP or a TWT scheduled STA. If the bit position k value of a bitmap is "1", then it may indicate the traffic ID k is classified as a latency-sensitive traffic stream. If the bit position k value of the bitmap is "0", then it may indicate the traffic ID k is not classified as a latency-sensitive traffic stream.

According to an embodiment, the restricted TWT traffic information field 530 may further include a number-of-members field. The number-of-members field may include member information. The member information may refer to the number of devices granted membership to perform communication by prioritizing transmission of frames in the R-TWT SP. The member information may refer to the number of devices granted membership by the time an AP (e.g., the AP 401 of FIG. 4) advertises the beacon signal 450. Additionally, the member information may correspond to the ID of the STA 301. For example, when the STA 301 is granted membership and becomes a member STA, the STA 301 may be assigned, as an ID, the value obtained by adding "1" to the member information (e.g., the number of members) at the time the STA 301 is granted membership.

The STA 301 may obtain the member information from the number-of-members field and perform communication in the R-TWT SP based on the member information (e.g., the number of members), thereby reducing inefficiency in the case of performing communication not based on member information.

According to an embodiment, when the restricted TWT traffic information field 530 does not further include the number-of-members field, a beacon signal (e.g., the beacon signal 450 of FIG. 4) may include a VS IE described below with reference to FIG. 11. The VS IE may include member information. The member information may refer to the number of devices granted membership to perform communication by prioritizing transmission of frames in the R-TWT SP.

FIG. 6 is a diagram illustrating an operation in which a station (STA) performs communication based on member information according to an embodiment.

FIG. 6 will be described assuming that an STA (e.g., the STA 301 of FIG. 3) is a non-member STA. Referring to FIG. 6, according to an embodiment, an STA (e.g., the STA 301 of FIG. 3) may obtain member information (e.g., the number of members) from the beacon signal 450. When the STA 301 is a device not granted membership (a non-member STA), the STA 301 may perform communication in an R-TWT SP based on the member information.

According to an embodiment, the STA 301 may perform communication regardless of a start time (or starting point) 610 of the R-TWT SP based on the member information. The member information may be about the number of devices granted membership (member STAs) being "0".

According to an embodiment, when the STA 301 is a device not granted membership (a non-member STA), the STA 301 may perform communication in the R-TWT SP without verifying whether frame exchange is completed before the start time (or staring point) 610 of the R-TWT SP based on the member information. The member information may be about the number of devices granted membership (member STAs) (e.g., the number of members) being "0". For example, if the number of members is "0", the STA 301 may initiate communication before the start time 610 and perform communication even after the start time 610 even when it is determined that frame exchange can not be completed before the start time 610, as in First Case 620. As another example, if the number of members is "0", the STA 301 may initiate communication after the start time 610 and perform communication in the R-TWT SP, as in Second Case 630.

According to an embodiment, if the number of members is not "0" according to the member information, the STA 301 may not initiate communication before the start time 610 when determining that frame exchange can not be completed before the start time 610, to guarantee authority for a device granted membership (a member STA) to perform communication by prioritizing transmission of frames in the R-TWT SP.

According to an embodiment, an AP may not grant membership to an STA when the STA transmits (or receives) latency-tolerant traffic (e.g., web browsing, video streaming, etc.), and in a general usage environment, the STA may transmit (or receive) latency-tolerant traffic, and thus, the possibility that the number of members is "0" may be high. If the STA performs communication in the R-TWT SP not based on member information as the beacon signal does not include member information (e.g., the number of members), inefficiency may occur in that a non-member STA needs to complete all communication before the start time of the R-TWT SP even though there are no member STAs to use the R-TWT SP. On the other hand, since the STA 301 performs communication in the R-TWT SP based on the member information, it is possible to reduce the inefficiency that occurs for an electronic device (e.g., a non-member STA) not granted membership when the number of devices granted membership is "0".

FIG. 7 is a diagram illustrating an operation in which an STA is granted membership according to an embodiment.

Operations 710 and 720 may be intended to describe the operation in which an STA is granted membership based on member information according to an embodiment.

In operation 710, the STA 301 may request membership for a scheduled R-TWT SP. The membership may be for the STA 301 to perform communication by prioritizing transmission of frames in the R-TWT SP. For example, the STA 301 may obtain information about a TID (traffic ID) mapped to a link from a TWT element. The STA 301 may transmit a frame requesting membership from the AP 401 to prioritize and transmit (or receive) traffic (e.g., a frame including data) mapped to a membership link.

In operation 720, the AP 401 may grant membership to the STA 301 based on the number of members when the STA 301 transmits (or receives) latency-sensitive traffic. For example, the AP 401 may assign the STA 301 the value obtained by adding "1" to the member information (e.g., the number of members) at the time the STA 301 is granted membership as the ID. The AP 401 may reflect the membership of the STA 301 in the member information. For example, the AP 401 may add "1" to the member information. The AP 401 may advertise the reflected member information to another STA. The AP 401 may grant membership to the STA 301 when determining that the STA 301 transmits (or receives) latency-sensitive traffic based on the priority information of traffic corresponding to the TID. For example, the AP 401 may grant membership to the STA 301 only when the STA 301 transmits (or receives) latency-sensitive traffic (e.g., a game, an audio/video call, etc.) based on the priority information of the traffic corresponding to the TID.

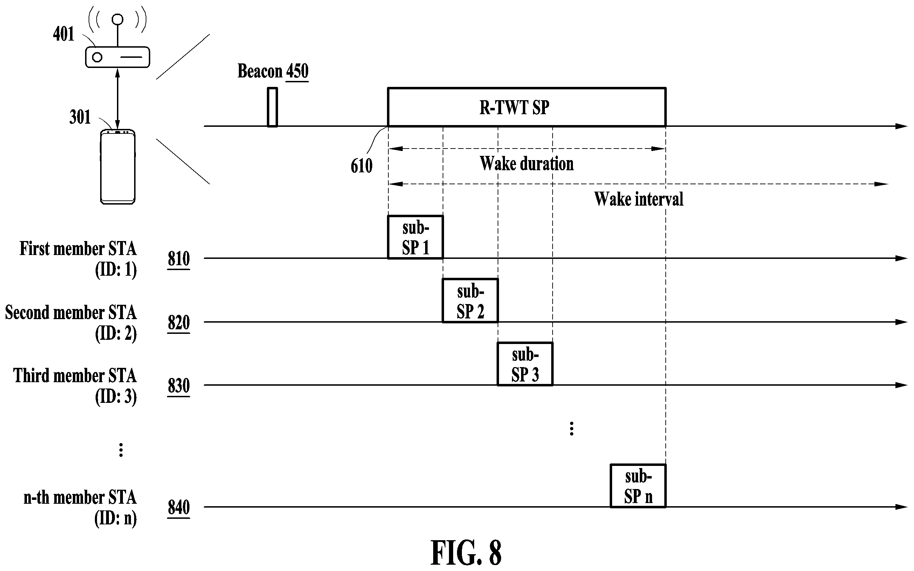

FIG. 8 is a diagram illustrating an operation in which an STA is assigned a sub-SP based on member information according to an embodiment.

Referring to FIG. 8, according to an embodiment, when the STA 301 is a member STA 810 to 840, the STA 301 may be assigned a portion of an R-TWT SP as a sub-SP based on member information. The member STA may include a first member STA 810, a second member STA 820, and a third member STA 830 to an n-th member STA 840, wherein n may be an integer greater than or equal to "1".

According to an embodiment, the STA 301 may match wake duration information of an R-TWT SP determined according to a TWT element (e.g., a broadcast TWT parameter set field) to the length of a sub-SP assigned to each member STA. The R-TWT SP may be the sum of sub-SPs of one or more member STAs 810 to 840. For example, the length of the R-TWT SP may be a value obtained by multiplying the number of member STAs by the length of a sub-SP corresponding to wake duration information.

According to an embodiment, the member STAs 810 to 840 may switch to a wake mode at a time (e.g., a sub-start time) the time equal to the product of the length of the sub-SP and the value obtained by subtracting "1" from an ID (e.g., the ID assigned by performing the operation of FIG. 7) elapses from the start time 610 of the R-TWT SP. The member STAs 810 to 840 may transmit (or receive) latency-sensitive traffic during the sub-SP from the sub-start time. For example, the first member STA 810 may have an ID of 1, and may switch to a wake mode at the start time 610 (e.g., a first sub-start time) to transmit (or receive) latency-sensitive traffic during the sub-SP. The second member STA 820 may have an ID of 2, and may switch to a wake mode at a time (e.g., a second sub-start time) the time equal to the product of the length of the sub-SP and "the value obtained by subtracting "1" from the ID of 2" elapses from the start time 610, and transmit (or receive) latency-sensitive traffic. The n-th member STA 840 may have an ID of n, and may switch to a wake mode at a time (e.g., an n-th sub-start time) the time equal to the product of the length of the sub-SP and "the value obtained by subtracting "1" from the ID of n" elapses from the start time 610, and transmit (or receive) latency-sensitive traffic.

According to an embodiment, if the member STAs all switch to a wake mode at the start time 610 of the R-TWT SP to transmit (or receive) latency-sensitive traffic, all the member STAs may have to participate in contention from the start time 610 to obtain a medium access opportunity. In this case, the member STAs may experience inefficiency (e.g., increased collision increase and decreased delay time and transmission speed quality) due to the increase in the contention level depending on the characteristics of CSMA/CA. In addition, the member STAs need to maintain an awake mode for contention from the start time 610 of the R-TWT SP and thus, may experience inefficiency of increased current consumption.

According to an embodiment, the member STAs 810 to 840 may match wake duration information of an R-TWT SP determined according to a TWT element (e.g., a broadcast TWT parameter set field) to the length of a sub-SP assigned to each member STA and determine the length of the R-TWT SP to be a value obtained by multiplying the number of member STAs by the length of the sub-SP corresponding to the wake duration information, and thus, may adaptively adjust the length of the R-TWT SP according to the number of members, thereby optimizing time resource usage at the overall network level.

According to an embodiment, the member STAs 810 to 840 may be assigned a sub-start time and a sub-SP (sub-SP) of the R-TWT SP based on the member information, and thus, it is possible to lower the contention level and optimize resource usage and current consumption by separating a traffic transmission and reception period for each member STA.

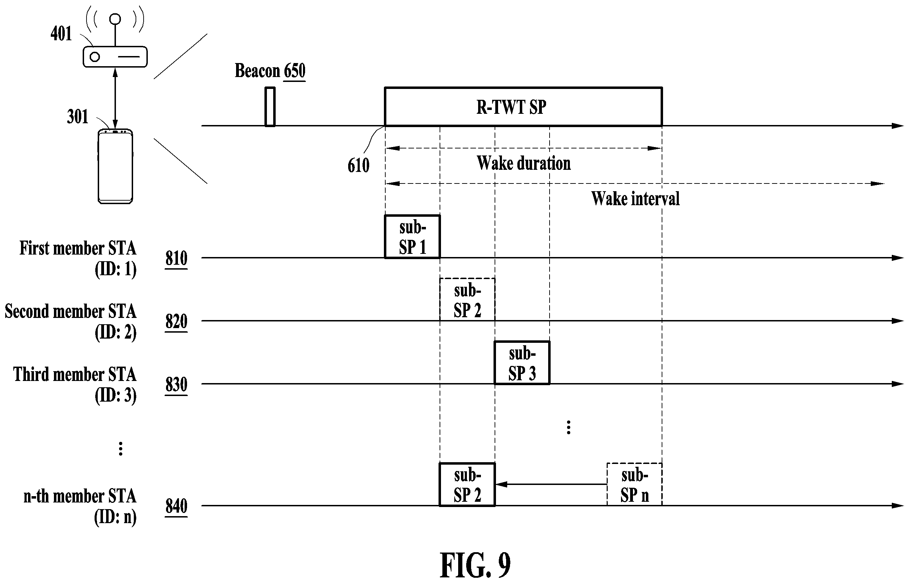

FIG. 9 is a diagram illustrating an operation in which an STA is reassigned a sub-SP based on member information according to an embodiment.

Referring to FIG. 9, according to an embodiment, when the STA 301 is a member STA 810 to 840, the STA 301 may receive modified member information in response to another electronic device canceling membership, among the member STAs 810 to 840. The member STA may include a first member STA 810, a second member STA 820, and a third member STA 830 to an n-th member STA 840, wherein n may be an integer greater than or equal to "1". The member information (e.g., the number of members) may be n. For example, the another electronic device canceling the membership may cancel the membership for not using latency-sensitive traffic.

For example, when the second member STA 820, among the member STAs 810 to 840, cancels membership, the AP 401 may advertise a beacon signal 650 including modified member information according to the membership cancellation. The modified member information (e.g., the modified number of members) may be "n-1", which is obtained by subtracting "1" from n, which is the existing member information (e.g., the number of members). The remaining member STAs (e.g., the first member STA 810, and the third member STA 830 to the n-th member STA 840) excluding the electronic device (e.g., the second member STA 820) canceling the membership, among the member STAs 810 to 840, may obtain the modified member information (e.g., "n-1") from the beacon signal.

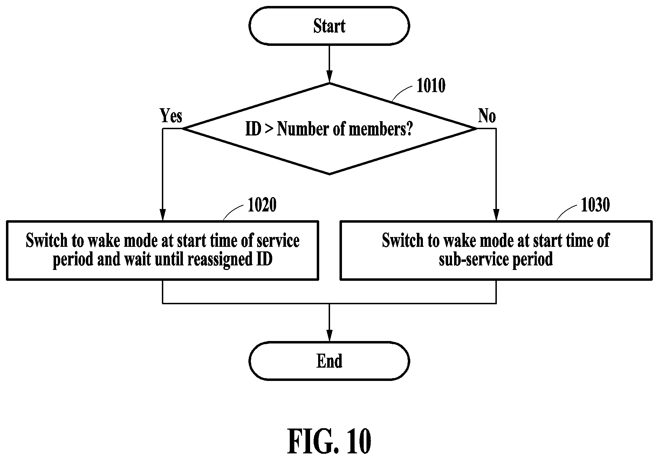

According to an embodiment, the remaining member STAs (e.g., the first member STA 810, and the third member STA 830 to the n-th member STA 840) excluding the electronic device (e.g., the second member STA 820) canceling the membership, among the member STAs 810 to 840, may be reassigned a sub-SP of the R-TWT SP based on the modified member information. The remaining member STAs (e.g., the first member STA 810, and the third member STA 830 to the n-th member STA 840) may be reassigned the sub-SP of the R-TWT SP by performing the operation described later with reference to FIG. 10.

According to an embodiment, the remaining member STAs (e.g., the first member STA 810, and the third member STA 830 to the n-th member STA 840) may compare the modified member information with their own IDs. The remaining member STAs (e.g., the first member STA 810, and the third member STA 830 to the n-th member STA 840) may, if their IDs are greater than the modified member information (e.g., "n-1 ") based on the comparison results, switch to a wake mode at the start time 610 of the R-TWT SP and wait until reassigned IDs from the AP 401. For example, the n-th member STA 840 among remaining member STAs (e.g., the first member STA 810, and the third member STA 830 to the n-th member STA 840) may switch to a wake mode at the start time 610 of the R-TWT SP and wait until reassigned an ID from the AP 401, since its ID (e.g., "n") is greater than the modified member information (e.g., "n-1").

According to an embodiment, the remaining member STAs (e.g., the first member STA 810, and the third member STA 830 to the n-th member STA 840) may, if their IDs are less than the modified member information (e.g., "n-1") based on the comparison results, switch to a wake mode at start times (e.g., sub-start times) of their respective sub-SPs and perform communication. For example, the remaining member STAs excluding the n-th member STA 840 among the remaining member STAs (e.g., the first member STA 810, and the third member STA 830 to the n-th member STA 840) may switch to a wake mode at start times (e.g., sub-start times) of their respective sub-SPs and perform communication, since their IDs are less than the modified member information (e.g., "n-1").

FIG. 10 is a flowchart illustrating an operation in which an STA is reassigned a sub-SP based on member information according to an embodiment.

Operations 1010 to 1030 may be intended to describe the operation in which an STA is reassigned a sub-SP of an R-TWT SP based on member information according to an embodiment.

In operation 1010, when any one of member STAs (e.g., the member STAs 810 to 840 of FIG. 9), cancels membership, the AP 401 may advertise a beacon signal 650 including modified member information according to the membership cancellation. The modified member information (e.g., the modified number of members) may be "n-1", which is obtained by subtracting "1" from n, which is the existing member information (e.g., the number of members). The remaining member STAs excluding the one canceling membership among the member STAs 810 to 840 may obtain the modified member information (e.g., "n-1") from the beacon signal. The remaining member STAs may determine whether their IDs are greater than the modified member information (e.g., "n-1"). The remaining member STAs may perform operation 1020 if their IDs are greater than the modified member information (e.g., "n-1"), and may perform operation 1030 if their IDs are less than the modified member information (e.g., "n-1").

In operation 1020, the STA 301 (e.g., the STA whose ID is greater than the modified member information (e.g., "n-1") among the remaining member STAs) may switch to a wake mode at a start time (e.g., the start time 610 of FIG. 9) of the R-TWT SP and wait until reassigned an ID from the AP 401. The STA 301 (e.g., the STA whose ID is greater than the modified member information (e.g., "n-1") among the remaining member STAs) may be reassigned the ID of the member STA canceling the membership from the AP 401 and reassigned a sub-SP corresponding to the reassigned ID. The STA 301 (e.g., the STA whose ID is greater than the modified member information (e.g., "n-1") among the remaining member STAs) may switch to a wake mode at a sub-start time of the reassigned sub-SP and perform communication.

In operation 1030, the STA 301 (e.g., the STA whose ID is greater than the modified member information (e.g., "n-1") among the remaining member STAs) may switch to a wake mode at a start time (e.g., a sub-start time) of the sub-SP and perform communication.

FIG. 11 is a diagram illustrating a beacon signal including a vendor-specific information element (VS IE) according to an embodiment.

Referring to FIG. 11, according to an embodiment, the beacon signal 450 may include a TWT element (e.g., the TWT element of FIG. 5) and member information. The TWT element may determine TWT parameters. The TWT parameters may include information about the R-TWT SP. The member information may be about the number of devices granted membership to perform communication by prioritizing transmission of frames in the R-TWT SP (e.g., the number of members). The member information may be included in a VS IE. The VS IE may be included in the beacon signal 450.

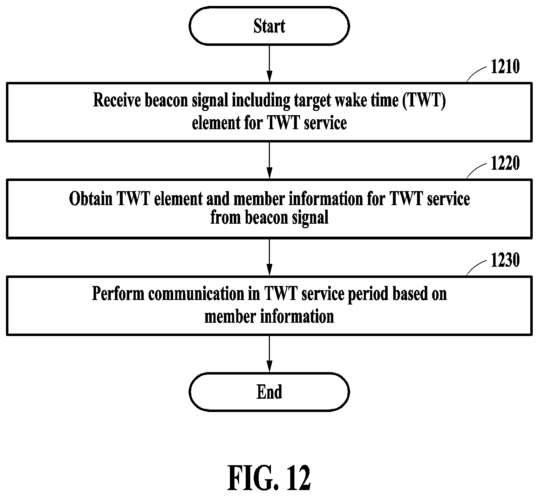

FIG. 12 is a flowchart illustrating an operating method of an STA according to an embodiment.

Operations 1210 to 1230 may be intended to describe an operating method of an STA (e.g., the STA 301 of FIG. 4) according to an embodiment.

In operation 1210, in a broadcast TWT, the AP 401 may advertise a beacon signal 450. The STA 301 may receive the beacon signal including a TWT element for a TWT service.

In operation 1220, the STA 301 may obtain the TWT element and member information for the TWT service from the beacon signal. The beacon signal may include the TWT element and the member information. The TWT element may determine TWT parameters. The TWT parameters may include information about the R-TWT SP. The member information may be included in one of the TWT element and a VS IE. The VS IE may be included in the beacon signal.

In operation 1230, the STA 301 may perform communication in a TWT SP based on the member information. The member information may be about the number of devices granted membership to perform communication by prioritizing transmission of frames in the R-TWT SP (e.g., the number of members). The STA 301 may perform communication in the R-TWT SP based on the member information (e.g., the number of members), thereby efficiently using time resources from the perspective of the entire network both for a device granted membership (e.g., a member STA) and an electronic device not granted membership (e.g., a non-member STA). For example, the STA 301 may switch from one of a doze mode and a wake mode to the other mode based on the member information (e.g., the number of members). As another example, when the STA 301 is a device not granted membership, the STA 301 may perform communication regardless of a start time 610 of the R-TWT SP based on the member information (e.g., the number of devices granted membership being "0"). As another example, the STA 301 may be assigned a sub-SP of the R-TWT SP based on the member information, and may switch to a wake mode in the assigned sub-SP. As another example, the STA 301 may receive modified member information in response to an electronic device canceling membership, and may be reassigned a sub-SP of the R-TWT SP based on the modified member information.

FIG. 13 is a block diagram illustrating an electronic device in a network environment according to an embodiment.

Referring to FIG. 13, an electronic device 1301 in a network environment 1300 may communicate with an electronic device 1302 via a first network 1398 (e.g., a short-range wireless communication network), or at least one of an electronic device 1304 or a server 1308 via a second network 1399 (e.g., a long-range wireless communication network). According to an embodiment, the electronic device 1301 may communicate with the electronic device 1304 via the server 1308. According to an embodiment, the electronic device 1301 may include a processor 1320, the memory 1330, an input module 1350, a sound output module 1355, a display module 1360, an audio module 1370, a sensor module 1376, an interface 1377, a connecting terminal 1378, a haptic module 1379, a camera module 1380, a power management module 1388, a battery 1389, a communication module 1390, a subscriber identification module (SIM) 1396, or an antenna module 1397. In some embodiments, at least one of the components (e.g., the connecting terminal 1378) may be omitted from the electronic device 1301, or one or more other components may be added thereto. In some embodiments, some of the components (e.g., the sensor module 1376, the camera module 1380, or the antenna module 1397) may be integrated as a single component (e.g., the display module 1360).

The processor 1320 may execute, for example, software (e.g., a program 1340 to control at least one other component (e.g., a hardware or software component) of the electronic device 1301 coupled with the processor 1320, and may perform various data processing or computation. According to an embodiment, as at least part of data processing or computation, the processor 1320 may store a command or data received from another component (e.g., the sensor module 1376 or the communication module 1390) in a volatile memory 1332, process the command or the data stored in the volatile memory 1332, and store resulting data in a non-volatile memory 1334. According to an embodiment, the processor 1320 may include the main processor 1321 (e.g., a central processing unit (CPU) or an application processor (AP)), or an auxiliary processor 1323 (e.g., a graphics processing unit (GPU), a neural processing unit (NPU), an image signal processor (ISP), a sensor hub processor, or a communication processor (CP)) that is operable independently from, or in conjunction with the main processor 1321. For example, when the electronic device 1301 includes the main processor 1321 and the auxiliary processor 1323, the auxiliary processor 1323 may be adapted to consume less power than the main processor 1321 or to be specific to a specified function. The auxiliary processor 1323 may be implemented separately from the main processor 1321 or as part of the main processor 1321.

The auxiliary processor 1323 may control at least some of functions or states related to at least one (e.g., the display module 1360, the sensor module 1376, or the communication module 1390 of the components of the electronic device 1301, instead of the main processor 1321 while the main processor 1321 is in an inactive (e.g., sleep) state, or together with the main processor 1321 while the main processor 1321 is an active state (e.g., executing an application). According to an embodiment, the auxiliary processor 1323 (e.g., an ISP or a CP) may be implemented as a portion of another component (e.g., the camera module 1380 or the communication module 1390) that is functionally related to the auxiliary processor 1323. According to an embodiment, the auxiliary processor 1323 (e.g., an NPU) may include a hardware structure specified for processing of an artificial intelligence (AI) model. An artificial intelligence model may be generated through machine learning. Such learning may be performed, e.g., by the electronic device 1301 where the artificial intelligence is performed, or via a separate server (e.g., the server 1308. Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network, or a combination of two or more thereof, but is not limited thereto. The artificial intelligence model may, additionally or alternatively, include a software structure other than the hardware structure.

The memory 1330 may store various data used by at least one component (e.g., the processor 1320 or the sensor module 1376 of the electronic device 1301. The various data may include, for example, software (e.g., the program 1340 and input data or output data for a command related thereto. The memory 1330 may include the volatile memory 1332 or the non-volatile memory 1334.

The program 1340 may be stored in the memory 1330 as software, and may include, for example, an operating system (OS) 1342, middleware 1344, or an application 1346.

The input module 1350 may receive a command or data to be used by another component (e.g., the processor 1320 of the electronic device 1301, from the outside (e.g., a user) of the electronic device 1301. The input module 1350 may include, for example, a microphone, a mouse, a keyboard, a key (e.g., a button), or a digital pen (e.g., a stylus pen).

The sound output module 1355 may output sound signals to the outside of the electronic device 1301. The sound output module 1355 may include, for example, a speaker or a receiver. The speaker may be used for general purposes, such as playing multimedia or playing a record. The receiver may be used to receive an incoming call. According to an embodiment, the receiver may be implemented separately from the speaker or as part of the speaker.

The display module 1360 may visually provide information to the outside (e.g., a user) of the electronic device 1301. The display module 1360 may include, for example, a display, a hologram device, or a projector and control circuitry to control a corresponding one of the display, hologram device, and projector. According to an embodiment, the display module 1360 may include a touch sensor adapted to detect a touch, or a pressure sensor adapted to measure the intensity of force incurred by the touch.

The audio module 1370 may convert a sound into an electrical signal and vice versa. According to an embodiment, the audio module 1370 may obtain the sound via the input module 1350 or output the sound via the sound output module 1355 or an external electronic device (e.g., the electronic device 1302 such as a speaker or a headphone) directly or wirelessly connected with the electronic device 1301.

The sensor module 1376 may detect an operational state (e.g., power or temperature) of the electronic device 1301 or an environmental state (e.g., a state of a user) external to the electronic device 1301, and then generate an electrical signal or data value corresponding to the detected state. According to an embodiment, the sensor module 1376 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1377 may support one or more specified protocols to be used for the electronic device 1301 to be coupled with the external electronic device (e.g., the electronic device 1302 directly (e.g., wiredly) or wirelessly. According to an embodiment, the interface 1377 may include, for example, a high-definition multimedia interface (HDMI), a universal serial bus (USB) interface, a secure digital (SD) card interface, or an audio interface.

The connecting terminal 1378 may include a connector via which the electronic device 1301 may be physically connected with an external electronic device (e.g., the electronic device 1302. According to an embodiment, the connecting terminal 1378 may include, for example, an HDMI connector, a USB connector, an SD card connector, or an audio connector (e.g., a headphone connector).

The haptic module 1379 may convert an electrical signal into a mechanical stimulus (e.g., a vibration or a movement) or an electrical stimulus which may be recognized by a user via his or her tactile sensation or kinesthetic sensation. According to an embodiment, the haptic module 1379 may include, for example, a motor, a piezoelectric element, or an electric stimulator.

The camera module 1380 may capture a still image and moving images. According to an embodiment, the camera module 1380 may include one or more lenses, image sensors, ISPs, or flashes.

The power management module 1388 may manage power supplied to the electronic device 1301. According to an embodiment, the power management module 1388 may be implemented as, for example, at least part of a power management integrated circuit (PMIC).

The battery 1389 may supply power to at least one component of the electronic device 1301. According to an embodiment, the battery 1389 may include, for example, a primary cell which is not rechargeable, a secondary cell which is rechargeable, or a fuel cell.

The communication module 1390 may support establishing a direct (e.g., wired) communication channel or a wireless communication channel between the electronic device 1301 and the external electronic device (e.g., the electronic device 1302, the electronic device 1304, or the server 1308 and performing communication via the established communication channel. The communication module 1390 may include one or more communication processors that operate independently of the processor 1320 (e.g., an application processor) and support direct (e.g., wired) communication or wireless communication. According to an embodiment, the communication module 1390 may include a wireless communication module 1392 (e.g., a cellular communication module, a short-range wireless communication module, or a global navigation satellite system (GNSS) communication module) or a wired communication module 1394 (e.g., a local area network (LAN) communication module, or a power line communication (PLC) module). A corresponding one of these communication modules may communicate with the external electronic device 1304 via the first network 1398 (e.g., a short-range communication network, such as Bluetooth^{™}, wireless-fidelity (Wi-Fi) direct, or infrared data association (IrDA)) or the second network 1399 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 1392 may identify and authenticate the electronic device 1301 in a communication network, such as the first network 1398 or the second network 1399, using subscriber information (e.g., international mobile subscriber identity (IMSI)) stored in the SIM 1396.

The wireless communication module 1392 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 1392 may support a high-frequency band (e.g., a mmWave band) to achieve, e.g., a high data transmission rate. The wireless communication module 1392 may support various technologies for securing performance on a high-frequency band, such as, e.g., beamforming, massive multiple-input and multiple-output (massive MIMO), full dimensional MIMO (FD-MIMO), an array antenna, analog beamforming, or a large scale antenna. The wireless communication module 1392 may support various requirements specified in the electronic device 1301, an external electronic device (e.g., the electronic device 1304), or a network system (e.g., the second network 1399). According to an embodiment, the wireless communication module 1392 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 1397 may transmit or receive a signal or power to or from the outside (e.g., the external electronic device). According to an embodiment, the antenna module 1397 may include an antenna including a radiating element including a conductive material or a conductive pattern formed in or on a substrate (e.g., a printed circuit board (PCB)). According to an embodiment, the antenna module 1397 may include a plurality of antennas (e.g., array antennas). In such a case, at least one antenna appropriate for a communication scheme used in the communication network, such as the first network 1398 or the second network 1399, may be selected, for example, by the communication module 1390 from the plurality of antennas. The signal or the power may then be transmitted or received between the communication module 1390 and the external electronic device via the selected at least one antenna. According to an embodiment, another component (e.g., a radio frequency integrated circuit (RFIC)) other than the radiating element may be additionally formed as part of the antenna module 1397.

According to an embodiment, the antenna module 1397 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1301 and the external electronic device 1304 via the server 1308 coupled with the second network 1399. Each of the external electronic devices 1302 and 1304 may be a device of a same type as, or a different type from, the electronic device 1301. According to an embodiment, all or some of operations to be executed by the electronic device 1301 may be executed at one or more external electronic devices (e.g., the external devices 1302 and 1304, and the server 1308. For example, if the electronic device 1301 should perform a function or a service automatically, or in response to a request from a user or another device, the electronic device 1301, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1301. The electronic device 1301 may provide the outcome, with or without further processing of the outcome, as at least part of a reply to the request. To that end, a cloud computing, distributed computing, mobile edge computing (MEC), or client-server computing technology may be used, for example. The electronic device 1301 may provide ultra low-latency services using, e.g., distributed computing or mobile edge computing. In another embodiment, the external electronic device 1304 may include an Internet-of-things (IoT) device. The server 1308 may be an intelligent server using machine learning and/or a neural network. According to an embodiment, the external electronic device 1304 or the server 1308 may be included in the second network 1399. The electronic device 1301 may be applied to intelligent services (e.g., smart home, smart city, smart car, or healthcare) based on 5G communication technology or IoT-related technology.

The electronic device according to the embodiments disclosed herein may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms such as "1^{st}," and "2^{nd}," or "first" and "second" may be used to simply distinguish a corresponding component from another, and do not limit the components in other aspect (e.g., importance or order). It is to be understood that if a component (e.g., a first component) is referred to, with or without the term "operatively" or "communicatively," as "coupled with," "coupled to," "connected with," or "connected to" another component (e.g., a second component), the component may be coupled with the other component directly (e.g., wiredly), wirelessly, or via a third component.

As used in connection with embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 1340) including one or more instructions that are stored in a storage medium (e.g., internal memory 1336 or external memory 1338) that is readable by a machine (e.g., the electronic device 1301). For example, a processor (e.g., the processor 1320) of the nearby device (e.g., the electronic device 1301) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

An electronic device (e.g., the STA 301 of FIG. 3, the first member STA 810, the second member STA 820, the third member STA 830 to the n-th member STA 840 of FIG. 8, the electronic device 1301 of FIG. 13) according to an embodiment may include at least one wireless communication module (e.g., the wireless communication module 1392 of FIG. 13) configured to transmit and receive a wireless signal, at least one processor (e.g., the processor 1320 of FIG. 13) operatively connected to the wireless communication module 1392, and a memory (e.g., the memory 1330 of FIG. 13) electrically connected to the processor 1320, and including instructions executable by the processor 1320, wherein when the instructions are executed by the processor 1320, the processor 1320 may be configured to perform a plurality of operations. The plurality of operations may include receiving a beacon signal (e.g., the beacon signal 450, the beacon signal 650 of FIG. 6) including a TWT element 500 for an R-TWT service. The plurality of operations may include obtaining member information from the beacon signal 450;650. The plurality of operations may include performing communication in an R-TWT SP based on the member information. The member information may include information associated with a device granted membership to perform communication by prioritizing transmission of frames in the R-TWT SP.

According to an embodiment, the TWT element 500 may be configured to determine a TWT parameter of the R-TWT service. The TWT parameter may include at least one of start time information of the R-TWT SP, R-TWT duration information of the R-TWT SP, or R-TWT interval information of the R-TWT SP.

According to an embodiment, the performing may include switching from a first mode to a second mode in the R-TWT SP based on the member information. The first mode may be one of a doze mode and a wake mode. The second mode may be a mode different from the one of the doze mode and the wake mode.

According to an embodiment, the performing may include, for a device not granted the membership, performing communication regardless of a start time (e.g., the start time 610 of FIG. 6) of the R-TWT SP based on the member information.

According to an embodiment, the member information may be about a number of devices granted the membership being "0".

According to an embodiment, the performing of communication regardless of the start time 610 of the R-TWT SP may include performing communication in the R-TWT SP without verifying whether frame exchange is completed before the start time 610 of the R-TWT SP based on the member information.

According to an embodiment, the performing may include being assigned a sub-SP of the R-TWT SP based on the member information, and switching to a wake mode in the assigned sub-SP.

According to an embodiment, the performing may include receiving modified member information in response to an electronic device 301; 810; 820; 830; 840; 1301 canceling the membership. The performing may include being reassigned a sub-SP of the R-TWT SP based on the modified member information.

According to an embodiment, the being reassigned may include determining whether to reassign the sub-SP based on an ID of the electronic device 301; 810; 820; 830; 840; 1301 and the modified member information.

According to an embodiment, the ID may be generated based on the member information.

According to an embodiment, the performing may include being granted the membership based on the member information.

According to an embodiment, the member information may be included in one of a VS IE and the TWT element 500 included in the beacon signal 450; 650.

According to an embodiment, the member information may be included in a restricted TWT traffic information field of the TWT element 500.

An operating method of an electronic device (e.g., the STA 301 of FIG. 3, the first member STA 810, the second member STA 820, the third member STA 830 to the n-th member STA 840 of FIG. 8, the electronic device 1301 of FIG. 13) according to an embodiment may include receiving a beacon signal (e.g., the beacon signal 450 of FIG. 4, the beacon signal 650 of FIG. 6) including a TWT element 500 for an R-TWT service. The operating method may include obtaining member information from the beacon signal 450;650. The operating method may include performing communication in an R-TWT SP based on the member information. The member information may include information associated with a device granted membership to perform communication by prioritizing transmission of frames in the R-TWT SP.

According to an embodiment, the performing may include switching from a first mode to a second mode in the R-TWT SP based on the member information. The first mode may be one of a doze mode and a wake mode. The second mode may be a mode different from the one of the doze mode and the wake mode.

According to an embodiment, the performing may include, when the electronic device is a device not granted the membership, performing communication regardless of a start time 610 of the R-TWT SP based on the member information.

According to an embodiment, the member information may be about a number of devices granted the membership being "0".

According to an embodiment, the performing of communication regardless of the start time of the R-TWT SP may include performing communication in the R-TWT SP without verifying whether frame exchange is completed before the start time 610 of the R-TWT SP based on the member information.

According to an embodiment, the performing may include being assigned a sub-SP of the R-TWT SP based on the member information. The performing may include switching to a wake mode in the assigned sub-SP.

According to an embodiment, the performing may include receiving modified member information in response to an electronic device 301; 810; 820; 830; 840; 1301 canceling the membership. The performing may include being reassigned a sub-SP of the R-TWT SP based on the modified member information.

An electronic device (e.g., the STA 301 of FIG. 3, the first member STA 810, the second member STA 820, the third member STA 830 to the n-th member STA 840 of FIG. 8, the electronic device 1301 of FIG. 13) according to an embodiment may include at least one wireless communication module 1392 configured to transmit and receive a wireless signal, at least one processor 1320 operatively connected to the wireless communication module 1392, and a memory 1330 electrically connected to the processor 1320, and including instructions executable by the processor 1320, wherein when the instructions are executed by the processor 1320, the processor 1320 may be configured to perform a plurality of operations. The plurality of operations may include receiving a beacon signal 450;650 including a TWT element 500 for an R-TWT service. The plurality of operations may include switching from one of a doze mode and a wake mode to another in an R-TWT SP based on member information obtained from the beacon signal. The member information may include information associated with a device granted membership to perform communication by prioritizing transmission of frames in the R-TWT SP.

## Claims

1. An electronic device (301; 810; 820; 830; 840; 1301) comprising:
at least one wireless communication circuit (1392) configured to transmit and receive a wireless signal;
at least one processor (1320) operatively connected to the wireless communication circuit (1392); and
memory (1330) storing instructions,
wherein the instructions, when executed by the at least one processor (1320) individually and/or collectively, cause the electronic device to:
receive a beacon signal (450;650) comprising a target wake time, TWT, element (500) for a restricted target wake time, R-TWT, service;
obtain member information from the beacon signal (450;650); and
perform communication in an R-TWT service period, SP, based on the member information and whether membership for the R-TWT SP is granted to the electronic device,
wherein the member information comprises the number of communication devices which are granted membership for the R-TWT SP.

2. The electronic device (301; 810; 820; 830; 840; 1301) of claim 1, wherein
the TWT element 500 is configured to set a TWT parameter of the R-TWT service, and
the TWT parameter comprises at least one of start time information of the R-TWT SP, R-TWT duration information of the R-TWT SP, or R-TWT interval information of the R-TWT SP.

3. The electronic device (301; 810; 820; 830; 840; 1301) of any one of claims 1 and 2, wherein the instructions, when executed by the at least one processor (1320) individually and/or collectively, cause the electronic device to further:
switch from a first mode to a second mode in the R-TWT SP based on the member information.

4. The electronic device (301; 810; 820; 830; 840; 1301) of any one of claims 1 to 3, wherein the instructions, when executed by the at least one processor (1320) individually and/or collectively, cause the electronic device to further:
when the electronic device is not granted the membership, perform communication regardless of a start time 610 of the R-TWT SP based on the member information.

5. The electronic device (301; 810; 820; 830; 840; 1301) of any one of claims 1 to 4, wherein the member information indicates the number of communication devices which are granted the membership being "0".

6. The electronic device (301; 810; 820; 830; 840; 1301) of any one of claims 1 to 5, when the electronic device is not granted the membership, wherein the instructions, when executed by the at least one processor (1320) individually and/or collectively, cause the electronic device to further:
perform communication in the R-TWT SP without verifying whether frame exchange is completed before the start time 610 of the R-TWT SP based on the member information by:
initiating communication before the start time and performing communication after the start time when it is determined that frame exchange can not be completed before the start time; or
initiating communication after the start time 610 and performing communication in the R-TWT SP.

7. The electronic device (301; 810; 820; 830; 840; 1301) of any one of claims 1 to 6, wherein the instructions, when executed by the at least one processor (1320) individually and/or collectively, cause the electronic device to further:
receive a sub-SP assigned to the electronic device based on the member information, wherein the sub-SP is a portion of the R-TWT SP; and
switch to a wake mode in the assigned sub-SP.

8. The electronic device (301; 810; 820; 830; 840; 1301) of any one of claims 1 to 7, wherein the instructions, when executed by the at least one processor (1320) individually and/or collectively, cause the electronic device to further:
receive modified member information in response to an electronic device (301; 810; 820; 830; 840; 1301) of the communication devices canceling the membership; and
receive a reassigned sub-SP of the R-TWT SP based on the modified member information.

9. The electronic device (301; 810; 820; 830; 840; 1301) of any one of claims 1 to 8, wherein the instructions, when executed by the at least one processor (1320) individually and/or collectively, cause the electronic device to further:
determine whether to reassign the sub-SP based on an identifier (ID) of the electronic device (301; 810; 820; 830; 840; 1301) and the modified member information,
wherein the ID is generated based on the member information.

10. The electronic device (301; 810; 820; 830; 840; 1301) of any one of claims 1 to 9, wherein the instructions, when executed by the at least one processor (1320) individually and/or collectively, cause the electronic device to further:
receive a grant of membership based on the member information, and
wherein the member information is then updated to reflect the membership of the electronic device.

11. The electronic device (301; 810; 820; 830; 840; 1301) of any one of claims 1 to 10, wherein the member information is included in one of a vendor-specific information element (VS IE) and the TWT element (500) included in the beacon signal (450; 650).

12. The electronic device (301; 810; 820; 830; 840; 1301) of any one of claims 1 to 11, wherein the member information is included in a restricted TWT traffic information field of the TWT element (500).

13. An operating method of an electronic device (301; 810; 820; 830; 840; 1301), the operating method comprising:
receiving a beacon signal (450;650) comprising a target wake time, TWT, element (500) for a restricted target wake time, R-TWT, service;
obtaining member information from the beacon signal (450;650); and
performing communication in an R-TWT service period, SP, based on the member information and whether membership for the R-TWT SP is granted to the electronic device,
wherein the member information comprises the number of communication devices which are granted membership for R-TWT SP.

14. The operating method of claim 13, wherein the performing comprises:
receiving modified member information in response to an electronic device (301; 810; 820; 830; 840; 1301) of the communication devices canceling the membership; and
being reassigned a sub-SP of the R-TWT SP based on the modified member information.

## Patentansprüche

1. Elektronische Vorrichtung (301; 810; 820; 830; 840; 1301), umfassend:
zumindest eine drahtlose Kommunikationsschaltung (1392), die konfiguriert ist, ein drahtloses Signal zu übertragen und zu empfangen;
zumindest einen Prozessor (1320), der mit der drahtlosen Kommunikationsschaltung (1392) wirkverbunden ist; und
Speicher (1330), der Anweisungen speichert,
wobei die Anweisungen, wenn sie durch den zumindest einen Prozessor (1320) einzeln und/oder gemeinsam ausgeführt werden, die elektronische Vorrichtung zu Folgendem veranlassen:
Empfangen eines Bakensignals (450;650), umfassend ein Soll-Weckzeit TWT, -Element (500) für einen eingeschränkten Soll-Weckzeit- R-TWT, -Dienst;
Erhalten von Mitgliedsinformationen von dem Bakensignal (450;650); und
Durchführen von Kommunikation in einem R-TWT-Dienstzeitraum SP, basierend auf den Mitgliedsinformationen und ob die Mitgliedschaft für den R-TWT SP dem elektronischen Gerät gewährt wird,
wobei die Mitgliedsinformationen die Anzahl der Kommunikationsgeräte umfassen, welchen die Mitgliedschaft für den R-TWT SP gewährt wird.

2. Elektronische Vorrichtung (301; 810; 820; 830; 840; 1301) nach Anspruch 1, wobei
das TWT-Element 500 konfiguriert ist, ein TWT-Parameter des R-TWT-Dienstes einzustellen, und
der TWT-Parameter zumindest eines von Startzeitinformationen des R-TWT SP, R-TWT-Dauerinformationen des R-TWT SP oder R-TWT-Intervallinformationen des R-TWT SP umfasst.

3. Elektronische Vorrichtung (301; 810; 820; 830; 840; 1301) nach einem der Ansprüche 1 und 2, wobei die Anweisungen, wenn sie durch den zumindest einen Prozessor (1320) einzeln und/oder gemeinsam ausgeführt werden, die elektronische Vorrichtung ferner zu Folgendem veranlassen:
Wechseln von einem ersten Modus zu einem zweiten Modus in dem R-TWT-SP basierend auf den Mitgliedsinformationen.

4. Elektronische Vorrichtung (301; 810; 820; 830; 840; 1301) nach einem der Ansprüche 1 bis 3, wobei die Anweisungen, wenn sie durch den zumindest einen Prozessor (1320) einzeln und/oder gemeinsam ausgeführt werden, die elektronische Vorrichtung ferner zu Folgendem veranlassen:
wenn der elektronischen Vorrichtung die Mitgliedschaft nicht gewährt wird, Durchführen einer Kommunikation unabhängig von einer Startzeit 610 des R-TWT SP basierend auf den Mitgliedsinformationen.

5. Elektronische Vorrichtung (301; 810; 820; 830; 840; 1301) nach einem der Ansprüche 1 bis 4, wobei die Mitgliedsinformationen die Anzahl der Kommunikationsvorrichtungen, welchen die Mitgliedschaft gewährt wird, "0" ist.

6. Elektronische Vorrichtung (301; 810; 820; 830; 840; 1301) nach einem der Ansprüche 1 bis 5, wenn der elektronischen Vorrichtung die Mitgliedschaft nicht gewährt wird, wobei die Anweisungen, wenn sie durch den zumindest einen Prozessor (1320) einzeln und/oder gemeinsam ausgeführt werden, die elektronische Vorrichtung ferner zu Folgendem veranlassen:
Durchführen einer Kommunikation in dem R-TWT-SP, ohne zu überprüfen, ob der Rahmenaustausch, basierend auf den Mitgliedsinformationen, vor der Startzeit 610 des R-TWT-SP abgeschlossen ist, durch:
Einleiten der Kommunikation vor der Startzeit und Durchführen der Kommunikation nach der Startzeit, wenn es bestimmt wird, dass der Rahmenaustausch nicht vor der Startzeit abgeschlossen werden kann; oder
Einleiten der Kommunikation nach der Startzeit 610 und Durchführen der Kommunikation in dem R-TWT SP.

7. Elektronische Vorrichtung (301; 810; 820; 830; 840; 1301) nach einem der Ansprüche 1 bis 6, wobei die Anweisungen, wenn sie durch den zumindest einen Prozessor (1320) einzeln und/oder gemeinsam ausgeführt werden, die elektronische Vorrichtung ferner zu Folgendem veranlassen:
Empfangen eines Unter-SP, der der elektronischen Vorrichtung zugewiesen ist, basierend auf den Mitgliedsinformationen, wobei der Unter-SP ein Abschnitt des R-TWT SP ist; und
Wechseln in einen Weck-Modus im zugewiesenen Unter-SP.

8. Elektronische Vorrichtung (301; 810; 820; 830; 840; 1301) nach einem der Ansprüche 1 bis 7, wobei die Anweisungen, wenn sie durch den zumindest einen Prozessor (1320) einzeln und/oder gemeinsam ausgeführt werden, die elektronische Vorrichtung ferner zu Folgendem veranlassen:
Empfangen modifizierter Mitgliedsinformationen als Reaktion darauf, dass eine elektronische Vorrichtung (301; 810; 820; 830; 840; 1301) der Kommunikationsvorrichtungen die Mitgliedschaft abbricht; und
Empfangen eines neu zugewiesenen Unter-SP des R-TWT-SP basierend auf den modifizierten Mitgliedsinformationen.

9. Elektronische Vorrichtung (301; 810; 820; 830; 840; 1301) nach einem der Ansprüche 1 bis 8, wobei die Anweisungen, wenn sie durch den zumindest einen Prozessor (1320) einzeln und/oder gemeinsam ausgeführt werden, die elektronische Vorrichtung ferner zu Folgendem veranlassen:
Bestimmen, ob der Unter-SP basierend auf einer Kennung (ID) der elektronischen Vorrichtung (301; 810; 820; 830; 840; 1301) und der modifizierten Mitgliedsinformationen neu zugewiesen werden soll,
wobei die ID basierend auf den Mitgliedsinformationen erzeugt wird.

10. Elektronische Vorrichtung (301; 810; 820; 830; 840; 1301) nach einem der Ansprüche 1 bis 9, wobei die Anweisungen, wenn sie durch den zumindest einen Prozessor (1320) einzeln und/oder gemeinsam ausgeführt werden, die elektronische Vorrichtung ferner zu Folgendem veranlassen:
Empfangen einer Gewährung der Mitgliedschaft basierend auf den Mitgliedsinformationen, und
wobei die Mitgliedsinformationen dann aktualisiert werden, um die Mitgliedschaft der elektronischen Vorrichtung widerzuspiegeln.

11. Elektronische Vorrichtung (301; 810; 820; 830; 840; 1301) nach einem der Ansprüche 1 bis 10, wobei die Mitgliedsinformationen in einem von einem anbieterspezifischen Informationselement (VS IE) und dem TWT-Element (500) eingeschlossen sind, das in dem Bakensignal (450; 650) eingeschlossen ist.

12. Elektronische Vorrichtung (301; 810; 820; 830; 840; 1301) nach einem der Ansprüche 1 bis 11, wobei die Mitgliedsinformationen in einem eingeschränkten TWT-Verkehrsinformationsfeld des TWT-Elements (500) eingeschlossen sind.

13. Betriebsverfahren für eine elektronische Vorrichtung (301; 810; 820; 830; 840; 1301), das Betriebsverfahren umfassend:
Empfangen eines Bakensignals (450; 650), umfassend ein Soll-Weckzeit- TWT, -Element (500) für einen eingeschränkten Soll-Weckzeit- R-TWT, -Dienst;
Erhalten von Mitgliedsinformationen von dem Bakensignal (450;650); und
Durchführen von Kommunikation in einem R-TWT-Dienstzeitraum, SP, basierend auf den Mitgliedsinformationen und ob die Mitgliedschaft für den R-TWT SP der elektronischen Vorrichtung gewährt wird,
wobei die Mitgliedsinformationen die Anzahl der Kommunikationsvorrichtungen umfassen, welchen die Mitgliedschaft für R-TWT SP gewährt wird.

14. Betriebsverfahren nach Anspruch 13, wobei das Durchführen Folgendes umfasst:
Empfangen modifizierter Mitgliedsinformationen als Reaktion darauf, dass eine elektronische Vorrichtung (301; 810; 820; 830; 840; 1301) der Kommunikationsvorrichtungen die Mitgliedschaft abbricht; und
neu Zuweisen eines Unter-SP des R-TWT-SP basierend auf den modifizierten Mitgliedsinformationen.

## Revendications

1. Dispositif électronique (301 ; 810 ; 820 ; 830 ; 840 ; 1301) comprenant :
au moins un circuit de communication sans fil (1392) configuré pour transmettre et recevoir un signal sans fil ;
au moins un processeur (1320) connecté de manière opérationnelle au circuit de communication sans fil (1392) ; et
une mémoire (1330) stockant des instructions,
dans lequel les instructions, lorsqu'elles sont exécutées individuellement et/ou collectivement par l'au moins un processeur (1320), amènent le dispositif électronique à :
recevoir un signal de balise (450 ; 650) comprenant un élément de temps de réveil cible, TWT (500) pour un service de temps de réveil cible restreint R-TWT ;
obtenir des informations de membre à partir du signal de balise (450 ; 650) ; et
effectuer une communication dans une période de service, SP, de temps R-TWT, sur la base des informations de membre et en fonction de l'octroi de l'appartenance au SP R-TWT au dispositif électronique,
dans lequel les informations de membre comprennent le nombre de dispositifs de communication auxquels est octroyée l'appartenance au SP R-TWT.

2. Dispositif électronique (301 ; 810 ; 820 ; 830 ; 840 ; 1301) selon la revendication 1, dans lequel
l'élément TWT 500 est configuré pour définir un paramètre TWT du service R-TWT, et
le paramètre TWT comprend au moins une parmi les informations d'heure de début du SP R-TWT, les informations de durée R-TWT du SP R-TWT ou les informations d'intervalle R-TWT du SP R-TWT.

3. Dispositif électronique (301 ; 810 ; 820 ; 830 ; 840 ; 1301) selon l'une quelconque des revendications 1 et 2, dans lequel les instructions, lorsqu'elles sont exécutées par l'au moins un processeur (1320), individuellement et/ou collectivement, amènent le dispositif électronique à, en outre :
passer d'un premier mode à un deuxième mode dans le SP R-TWT sur la base des informations de membre.

4. Dispositif électronique (301 ; 810 ; 820 ; 830 ; 840 ; 1301) selon l'une quelconque des revendications 1 à 3, dans lequel les instructions, lorsqu'elles sont exécutées par l'au moins un processeur (1320), individuellement et/ou collectivement, amènent le dispositif électronique à, en outre :
lorsque le dispositif électronique ne s'est pas vu octroyer l'appartenance, effectuer une communication indépendamment d'une heure de début 610 du SP R-TWT sur la base des informations de membre.

5. Dispositif électronique (301 ; 810 ; 820 ; 830 ; 840 ; 1301) selon l'une quelconque des revendications 1 à 4, dans lequel les informations de membre indiquent que le nombre de dispositifs de communication auxquels a été octroyée l'appartenance est « 0 ».

6. Dispositif électronique (301 ; 810 ; 820 ; 830 ; 840 ; 1301) selon l'une quelconque des revendications 1 à 5, lorsque le dispositif électronique ne s'est pas vu octroyer l'appartenance, dans lequel les instructions, lorsqu'elles sont exécutées par l'au moins un processeur (1320), individuellement et/ou collectivement, amènent le dispositif électronique à, en outre :
effectuer une communication dans le SP R-TWT sans vérifier si l'échange de trame est terminé avant l'heure de début 610 du SP R-TWT sur la base des informations de membre en :
initiant la communication avant l'heure de début et en effectuant la communication après l'heure de début lorsqu'il est déterminé que l'échange de trame ne peut pas être terminé avant l'heure de début ; ou
initiant la communication après l'heure de début 610 et en effectuant la communication dans le SP R-TWT.

7. Dispositif électronique (301 ; 810 ; 820 ; 830 ; 840 ; 1301) selon l'une quelconque des revendications 1 à 6, dans lequel les instructions, lorsqu'elles sont exécutées par l'au moins un processeur (1320), individuellement et/ou collectivement, amènent le dispositif électronique à, en outre :
recevoir un sous-SP attribué au dispositif électronique sur la base des informations de membre, dans lequel le sous-SP est une partie du SP R-TWT ; et
basculer vers un mode de réveil dans le sous-SP attribué.

8. Dispositif électronique (301 ; 810 ; 820 ; 830 ; 840 ; 1301) selon l'une quelconque des revendications 1 à 7, dans lequel les instructions, lorsqu'elles sont exécutées par l'au moins un processeur (1320), individuellement et/ou collectivement, amènent le dispositif électronique à, en outre :
recevoir des informations de membre modifiées en réponse au fait qu'un dispositif électronique (301 ; 810 ; 820 ; 830 ; 840 ; 1301) des dispositifs de communication annule l'appartenance ; et
recevoir un sous-SP réattribué du SP R-TWT sur la base des informations de membre modifiées.

9. Dispositif électronique (301 ; 810 ; 820 ; 830 ; 840 ; 1301) selon l'une quelconque des revendications 1 à 8, dans lequel les instructions, lorsqu'elles sont exécutées par l'au moins un processeur (1320), individuellement et/ou collectivement, amènent le dispositif électronique à, en outre :
déterminer s'il faut réaffecter le sous-SP sur la base d'un identifiant (ID) du dispositif électronique (301 ; 810 ; 820 ; 830 ; 840 ; 1301) et des informations de membre modifiées,
dans lequel l'ID est généré sur la base des informations de membre.

10. Dispositif électronique (301 ; 810 ; 820 ; 830 ; 840 ; 1301) selon l'une quelconque des revendications 1 à 9, dans lequel les instructions, lorsqu'elles sont exécutées par l'au moins un processeur (1320), individuellement et/ou collectivement, amènent le dispositif électronique à, en outre :
recevoir un octroi d'appartenance sur la base des informations de membre, et
dans lequel les informations de membre sont ensuite mises à jour pour refléter l'appartenance du dispositif électronique.

11. Dispositif électronique (301 ; 810 ; 820 ; 830 ; 840 ; 1301) selon l'une quelconque des revendications 1 à 10, dans lequel les informations de membre sont incluses dans l'un d'un élément d'information spécifique au vendeur (VS IE) et de l'élément TWT (500) inclus dans le signal de balise (450 ; 650).

12. Dispositif électronique (301 ; 810 ; 820 ; 830 ; 840 ; 1301) selon l'une quelconque des revendications 1 à 11, dans lequel les informations de membre sont incluses dans un champ d'informations de trafic de temps TWT restreint de l'élément TWT (500).

13. Procédé opérationnel d'un dispositif électronique (301 ; 810 ; 820 ; 830 ; 840 ; 1301), le procédé opérationnel comprenant :
la réception d'un signal de balise (450 ; 650) comprenant un élément de temps de réveil cible, TWT, (500) pour un service de temps de réveil cible restreint, R-TWT ;
l'obtention d'informations de membre à partir du signal de balise (450 ; 650) ; et
la réalisation d'une communication dans une période de service, SP, de temps R-TWT sur la base des informations de membre et en fonction de l'octroi de l'appartenance au SP R-TWT au dispositif électronique,
dans lequel les informations de membre comprennent le nombre de dispositifs de communication auxquels est octroyée l'appartenance au SP R-TWT.

14. Procédé opérationnel selon la revendication 13, dans lequel la réalisation comprend :
la réception d'informations de membre modifiées en réponse au fait qu'un dispositif électronique (301 ; 810 ; 820 ; 830 ; 840 ; 1301) des dispositifs de communication annule l'appartenance ; et
reçoive l'attribution d'un sous-SP du SP R-TWT sur la base des informations de membre modifiées.
